# EUROPÄISCHE PATENTSCHRIFT

(11) **EP 2 083 338 B1**
(45) Veröffentlichungstag und Bekanntmachung des Hinweises auf die Patenterteilung: **19.06.2019**
(21) Anmeldenummer: 09151349.9
(22) Anmeldetag: 26.01.2009
(51) Int. Cl.: G05B 23/02

(54) **Verfahren und Vorrichtung zum Überwachen einer Maschine**
Process and device for monitoring a machine
Séchage effectif de gouttelettes

(30) Priorität: 28.01.2008 DE 102008006370
(43) Veröffentlichungstag der Anmeldung: 29.07.2009
(73) Patentinhaber: PRÜFTECHNIK Dieter Busch AG, 85737 Ismaning (DE)
(72) Erfinder: Becker, Edwin, 48734 Reken (DE)

(56) Entgegenhaltungen:
- EP-A- 0 612 039
- US-A- 5 210 704
- US-A1- 2003 004 765
- US-A1- 2003 074 159
- RHEE S J ET AL: "Using cost based FMEA to enhance reliability and serviceability", ADVANCED ENGINEERING INFORMATICS, ELSEVIER, Bd. 17, Nr. 3-4, 1. Juli 2003 (2003-07-01) , Seiten 179-188, XP004595480, ISSN: 1474-0346
- Chapter 5: "System FMEA" In: D.H. Stamatis: "Failure Mode and Effect Analysis; FMEA from Theory to Execution.", 2003, ASQ Quality Press ISBN: 0-87389-598-3 pages 107-128,
- Chapter 14: In: T.A. Harris and M.N. Kotzalas: "Rolling Bearing Analysis, 5th edition, Essential Concepts of Bearing Technology", 2006, Taylor and Francis

## Beschreibung

Die vorliegende Erfindung betrifft eine Vorrichtung und ein Verfahren zum Überwachen einer Maschine, insbesondere einer Windenergieanlage.

Mit Condition Monitoring (CM) sollen Abweichungen im Lauf- und Betriebsverhalten von Maschinen und Anlagen rechtzeitig erkannt und gezielte Diagnoseaussagen zum Maschinenzustand getroffen werden. Das Ziel einer Diagnose kann eine Funktionsdiagnose- oder eine Schädigungsdiagnose sein. Die Funktionsdiagnose bezieht sich auf die Messung von Funktions- und Betriebsparametern, die zur einwandfreien Funktion und für den wirtschaftlichen Betrieb der Maschinen erforderlich sind. Unter Schädigungsdiagnose wird die Ermittlung des Schädigungszustandes von Maschinen und Maschinenkomponenten verstanden. Dazu gehören alle Diagnosemaßnahmen zur Ermittlung des Verschleissgrades und deren Auswirkungen, der Ermüdung und der Korrosion sowie sonstiger schädigender Einflüsse. Als Komplexdiagnose wird die Ermittlung des Gesamtzustands von Maschinen bezeichnet. Die Ermittlung des Komplexzustandes erfolgt anhand mehrerer (komplexer) Kenngrößen. Die Tiefendiagnose bezieht sich auf die Ermittlung des Zustandes einzelner Baugruppen von Maschinen oder des Zustandes von Einzelteilen. Sie stellt demnach eine Detailüberprüfung dar. Tiefendiagnosen dienen deshalb überwiegend zur Fehlerlokalisierung und zur Festlegung des Instandsetzungsumfanges vor planmäßigen Instandsetzungen.

Die DE 10 2005 031 436 A1 betrifft ein Verfahren zur Ermüdungsüberwachung einer Windenergieanlage mittels Schwingungssensoren, wobei die Steifigkeitsmatrix und Trägheitsmatrix ermittelt werden, um Zustandsänderungen zu erkennen. Aus der EP 1 760 311 A2 ist ein Verfahren zur Zustandsüberwachung einer Windenergieanlage mittels an der Hauptwelle angebrachten Sensoren beschrieben, wobei u.a. eine Ermüdungsbewertung vorgenommen wird. Empfehlungen für die Messung und Beurteilung von mechanischen Schwingungen von Windenergieanlagen sind auch in der VDI-Richtlinie 3834 beschrieben.

Unter Fehlzustandsart- und- auswirkungsanalyse (FMEA) (auch als Fehlermöglichkeitseinflussanalyse bezeichnet) versteht man eine bestimmte Art von systematischem Vorgehen bei der Analyse eines Systems, um mögliche Fehlzustandsarten, ihre Ursachen und ihre Auswirkungen auf das Systemverhalten zu ermitteln. FMEA-Verfahren werden in vielen Industriebereichen, z.B. auch im Anlagenbau, bei der Produktentwicklung, Produktverbesserung und z.T. auch bei der Entwicklung von Instandhaltungsplänen verwendet.

Die FMECA (Fehlzustandsart-, -auswirkungs- und -kritizitätsanalyse) bezeichnet einen Fall der FMEA, in welchem ein Mittel zur Klassifizierung der Schwere der Ausfallarten des Systems vorgesehen ist, um die Einstufung der Dringlichkeit von Abhilfemaßnahmen zu ermöglichen. Dies geschieht durch Kombination des Maßes für die Schwere mit der erwarteten Eintrittsfäufigkeit, um eine "Kritizität" genannte Metrik zu erzeugen.

Eine systematische Beschreibung der FMEA findet sich beispielsweise in der DIN EN 60812.

Zur quantitativen Bestimmung der Kritizität von Systemfehlern bzw. Systemausfällen wird in der FMEA typischerweise eine sogenannte Risikoprioritätszahl (RPZ) verwendet, die sich aus dem Produkt der folgenden Indexgrößen ergibt: Schwere der Auswirkung des Auftretens des Fehlers hinsichtlich der Funktionsfähigkeit des Systems; Entdeckungswahrscheinlichkeit des Fehlers (Schätzwert für die Chance, den Fehler zu erkennen und zu beheben, bevor das System vom Fehler betroffen ist); Häufigkeit, mit der der Fehler innerhalb eines bestimmten Zeitraums auftritt. Dabei wird typischerweise jeder der Indexgrößen ein ganzzahliger Wert zwischen 1 und 10 zugeordnet.

In der US 6,968,293 B2 wird vorgeschlagen, FMEA-Verfahren im Zusammenhang mit der Zustandsüberwachung von Systemen zu verwenden, wobei als Anwendung die Überwachung von Bahngleisen genannt ist; es wird auch die Anwendung von Risikoprioritätszahlen erwähnt. Die US 2004/0263342 A1 betrifft ein Verfahren zur Zustandsüberwachung für einen Elektromotor, wobei Parameter überwacht werden, die aus FMEA-Ausfallarten abgeleitet sind, wobei es sich z.B. um Schwingungen handeln kann. Die US 2007/0050178 A1 betrifft eine Risikoabschätzung für die Verkabelung von Flugzeugen, wobei Schwingungen in die Abschätzung einbezogen werden können und das Ergebnis in Form eines FMEA-Berichts ausgegeben werden kann. In der DE 10 2004 015 400 A1 ist ein System zur Bewertung der Wartungsfähigkeit von Systemen beschrieben, welches eine FMEA-Schnittstelle aufweist. In der DE 101 39 968 A1 ist ein automatisiertes FMEA-Verfahren beschrieben, bei welchem auch Risikoprioritätszahlen ermittelt werden.

Die US 2003/004765 A1 offenbart ein Verfahren zum Überwachen einer Maschine, bei dem ein FMEA Verfahren verwendet und im Rahmen des FMEA-Verfahrens für eine Komponente der Maschine für einen vorbestimmten Grenzwert der Maschinenkomponente eine Prioritätszahl ermittelt wird, die sich aus dem Produkt der folgenden Indexgrößen ergibt: Schwere der Auswirkung der Überschreitung des Grenzwerts hinsichtlich der Funktionsfähigkeit der Maschine; und Entdeckungswahrscheinlichkeit der Überschreitung des Grenzwerts. Die Prioritätszahl wird bei der Bewertung des aktuellen Maschinenzustands, der notwendigen Instandhaltungsmaßnahmen und/oder des Ausfallrisikos der Maschine verwendet.

Kapitel 5 in D. H. Stamalis: "Failure Mode and Effect Analysis; FMEA from Theory to Execution.", 2003, ASQ Quality Press, ISBN: 0-8789-598-3, Seiten 107-128 erläutert das Konzept und ein Verfahren zur Konstruktion eines FMEA für ein System.

Kapitel 14 in T. A. Harris und M. N. Kotzalas: "Rolling Bearing Analysis, 5th edition, Essential Concepts of Bearing Technology", 2006, Taylor and Francis gibt einen Überblick über Schwingungen in Lagern.

Es ist Aufgabe der vorliegenden Erfindung, eine Vorrichtung bzw. ein Verfahren zum Überwachen einer Maschine zu schaffen, womit in verlässlicher und praxisbezogener Weise Maschinenzustände eingeschätzt werden können, um den Maschinennutzen zu optimieren und das Betriebsrisiko zu minimieren.

Diese Aufgabe wird erfindungsgemäß gelöst durch ein Verfahren gemäß Anspruch 1 sowie eine Vorrichtung gemäß Anspruch 16.

Bei der erfindungsgemäßen Lösung ist vorteilhaft, dass mittels der Bildung der Schwingprioritätszahl (SPZ) bzw. der Diagnoseprioritätszahl (DPZ) eine aussagekräftige Bewertung des aktuellen Maschinenzustands, der notwendigen Instandhaltungsmaßnahmen, des Diagnoseschemas bzw. des Diagnosesystems, insbesondere des Schwingungserfassungssystems, und/oder des Ausfallrisikos der Maschine ermöglicht wird.

Vorzugsweise wird zusätzlich zu der Schwingprioritätszahl und/oder der Diagnoseprioritätszahl eine Risikoprioritätszahl (RPZ) ermittelt, die sich aus dem Produkt der folgenden Indexgrößen ergibt: Häufigkeit, mit der ein vorbestimmter Fehler im Betrieb der Maschine auftritt; Schwere der Auswirkung des Auftretens des Fehlers hinsichtlich der Funktionsfähigkeit der Maschine; und Entdeckungswahrscheinlichkeit des Auftretens des Fehlers mittels des verwendeten Diagnoseschemas und Diagnosesystems; wodurch die Bewertung des aktuellen Maschinenzustands, der notwendigen Instandhaltungsmaßnahmen, des Diagnoseschemas, des Diagnosesystems und/oder des Ausfallrisikos der Maschine verbessert werden kann.

Zweckmäßigerweise wird die Maschine in mehrere Maschinenkomponenten unterteilt, wobei für jede der Maschinenkomponenten mindestens eine Schwingprioritätszahl, Diagnoseprioritätszahl und /oder Risikoprioritätszahl ermittelt wird.

Typischerweise handelt es sich bei der Maschine um eine Windkraftanlage.

Weitere bevorzugte Ausgestaltungen der Erfindung ergeben sich aus den Unteransprüchen. Im folgenden wird die Erfindung anhand von Ausführungsbeispielen näher erläutert.

Im Rahmen der vorliegenden Erfindung werden FMEA-Verfahren verwendet, um Zustandsüberwachungsverfahren und Diagnosealgorithmen zielsicher auszuwählen, Diagnoseunsicherheiten abzuschätzen und für eine regelmäßige Zustandsüberwachung geeignete Größen abzuleiten. Die Erfindung unterstützt auch die Risikobewertung von Maschinen und Anlagen, z.B. für Versicherer.

Für die Durchführung des Überwachungsverfahrens sollten zunächst folgende grundlegenden Kenntnisse für die zu überwachende Maschine vorliegen:
- Kenntnisse und Informationen zum strukturellen Aufbau der Maschine;
- Kenntnisse und Informationen zum Zusammenwirken der einzelnen zu überprüfenden Baugruppen der maschine;
- Wissen und Erfahrungen über die für die Maschine üblichen charakteristischen Diagnoseparameter, Abnahmerichtwerte sowie deren Toleranzbereiche bzw. Aussonderungsgrenzwerte;
- Informationen und Erfahrungen über die während der Nutzung der Maschine möglichen Fehler und Schädigungen an den einzelnen Baugruppen und deren Auswirkungen;
- Wissen über die anzuwendenden Diagnoseverfahren und einzuhaltenden Diagnosebedingungen.

Beim Einsatz der Erfindung für Windenergieanlagen können beispielsweise über eine Kodierung ähnliche und baugleiche Windenergieanlagen identifiziert, einander zugeordnet und für ein analoges Vorgehen beim Diagnoseprozess vorbereitet werden.

Üblicherweise wird die Maschine für die Analyse in mehrere Maschinenkomponenten (Hauptkomponenten) unterteilt. Die nachfolgend geschilderten Verfahren werden dann für jede dieser Maschinenkomponenten durchgeführt.

Die zu überwachende Maschine ist mit einem Diagnosesystem verbunden, welches Sensoren zum Erfassen von physikalischen Parametern der Maschine bzw. der jeweiligen Maschinenkomponente sowie eine als Datenverarbeitungsanlage ausgebildete Überwachungseinheit aufweist. Üblicherweise umfasst das Diagnosesystem mindestens ein Schwingungserfassungssystem zum Erfassen von Schwingungen der Maschine bzw. der Maschinenkomponente; in diesem Fall kann es sich bei den Sensoren beispielsweise um Beschleunigungssensoren handeln. Je nach Anwendung können jedoch auch andere physikalische Parameter gemessen werden als Schwingungen, beispielsweise die Konzentration von Partikeln einer bestimmten Größe im Schmiermittel der Maschine; durch eine solche Partikelüberwachung können beispielsweise Rückschlüsse auf den aktuellen Abnutzungsgrad der Maschine gezogen werden.

Im Rahmen der Erfindung können die folgenden Prioritätszahlen ermittelt werden: Schwingprioritätszahl (SPZ), Diagnoseprioritätszahl (DPZ) sowie Risikoprioritätszahl (RPZ).

Bei der Ermittlung der Schwingprioritätszahl wird zunächst für jede Hauptkomponente der Maschine mindestens ein Schwinggrenzwert, typischerweise jedoch mehrere, festgelegt. Bei den Schwinggrenzwerten kann es sich beispielsweise um allgemein bekannte maschinenspezifische Grenzwerte handeln. Solche maschinenspezifischen Grenzwerte findet man beispielsweise in verschiedenen Normen (z.B. ISO und AGMA) oder Richtlinien (z.B. API oder VDI), wobei diese Grenzwerte oft auf Basis von Reihenuntersuchungen und systematischen Maschinensammlungen beruhen. Als Beispiel sei auf die ISO 10816-3 verwiesen. Für Windenergieanlagen kann man Schwinggrenzwerte beispielsweise in Teil 11 der VDI-Richtlinie 3834 finden.

Ferner können, falls vorhanden, auch hersteller- und betreiberspezifische Grenzwerte herangezogen werden. Solche Grenzwerte beruhen in der Regel auf Erfahrungen der Hersteller bzw. Betreiber. In diesem Zusammenhang sei beispielsweise eine Richtlinie von General Motors erwähnt, wo man Akzeptanzbänder für Maschinenkomponenten für Abnahmen nutzt. Für Windenergieanlagen existieren allerdings derzeit keine derartigen Akzeptanzbänder.

Die Schwingprioritätszahl ergibt sich als Produkt dreier Indexgrößen *A_{S}, B_{S}* und *E_{S},* wobei *A_{S}* die erwartete Häufigkeit angibt, mit welcher der jeweilige Schwinggrenzwert der Maschinenkomponente überschritten wird, *B_{S}* die erwartete Schwere der Auswirkung der Überschreitung des Schwinggrenzwerts hinsichtlich der Funktionsfähigkeit der Maschine bzw. der Maschinenkomponente angibt und *E_{S}* die erwartete Entdeckungswahrscheinlichkeit der Überschreitung des Schwinggrenzwerts mittels des vorgesehenen Schwingungserfassungssystems bzw. Diagnosesystems angibt. Die Größe *A_{S}* steht somit für das Auftreten bzw. die Wahrscheinlichkeit der Überschreitung des Schwinggrenzwerts, *B_{S}* steht für die Bedeutung bzw. das Schadensmaß der Überschreitung des Schwinggrenzwerts und *C_{S}* steht für die Entdeckungswahrscheinlichkeit der Überschreitung des Schwinggrenzwerts. Typischerweise wird die Schwingprioritätszahl so definiert, dass jede der drei Größen *A_{S}, B_{S}* und *E_{S}* einen ganzzahligen Wert zwischen 1 und 10 annehmen kann, so dass die Schwingprioritätszahl zwischen 1 und 1000 liegen kann. Die Zuweisung des entsprechenden Werts von *A_{S}, B_{S}* und *E_{S}* für den jeweiligen Schwinggrenzwert und die jeweilige Maschinenkomponente erfolgt, soweit möglich, auf der Basis von Betriebserfahrungen mit der zu überwachenden Maschine bzw. des Typs der zu überwachenden Maschine oder muss ansonsten aus allgemeineren Prinzipien abgeleitet werden. Im folgenden ist ein Beispiel dafür angegeben, wie eine solche Zuweisung erfolgen kann:
Indexgröße *A_{S}* (Auftreten/Wahrscheinlichkeit): Es wird bewertet, mit welcher Häufigkeit der Schwinggrenzwerte einer Maschine überschritten werden. Dabei bedeuten:

| | |
|---|---|
| 1 | unwahrscheinlich |
| 2-3 | vereinzelt |
| 4-6 | oft |
| 7-8 | regelmäßig |
| 9-10 | permanent |

Indexgröße *B_{S}* (Bedeutung/Schadensmaß): Mit dieser Bewertung werden die Auswirkungen und die Folgen für das System dargestellt. Dabei bedeuten:

| | |
|---|---|
| 1 | ohne Bedeutung |
| 2-3 | wenig Bedeutung |
| 4-6 | beeinträchtigt Lebensdauer |
| 7-8 | reduziert Lebensdauer |
| 9-10 | schädigt Anlage |

Indexgröße *C_{S}* (Entdeckungswahrscheinlichkeit): Diese Bewertung bringt eine Aussage zur Erkennbarkeit der Zusatzschwingungen mit unterschiedlichen CM-Techniken. Dabei bedeuten:

| | |
|---|---|
| 1-2 | hoch mit online CM, Kennwerte direkt gemessen |
| 3-5 | gut mit online CM, Kennwerte indirekt gemessen |
| 6-8 | gering, mit offline CM, Kennwerte direkt gemessen |
| 9-10 | sehr gering, mit offline CM, Kennwerte indirekt abgeleitet |

Ein praktisches Beispiel für die Ermittlung von Schwingprioritätszahlungen für eine Windenergieanlage ist in Tabelle 1 angegeben, und zwar für die Komponenten Generator und Getriebe.

Die Schwingprioritätszahl kann bei der Bewertung des aktuellen Maschinenzustands, der notwendigen Instandhaltungsmaßnahmen, des Schwingungserfassungssystems und/oder des Ausfallrisikos der Maschine bzw. der Maschinenkomponente verwendet werden. Die Schwingprioritätszahl kann auch bei der Auswahl des Schwingungserfassungssystems herangezogen werden. Vorzugsweise wird die zeitliche Entwicklung der Schwingprioritätszahl verfolgt und zwecks Überwachung der zeitlichen Veränderung des Maschinenzustands ausgewertet. Insbesondere kann die Schwingprioritätszahl auch bei der Entscheidung über Zeitpunkt und Art zutreffender Instandhaltungsmaßnahmen berücksichtigt werden.

Die Diagnoseprioritätszahl ergibt sich als Produkt dreier Indexgrößen S, F und K. Die Diagnoseprioritätszahl wird für jede Maschinenkomponente jeweils für mindestens einen vorbestimmten Fehler, typischerweise mehrere, ermittel, der mittels des verwendeten Diagnoseschemas und des verwendeten Diagnosesystems diagnostiziert werden kann. Dabei gibt *S* die erwartete Schwere der Auswirkung des Auftretens des Fehlers hinsichtlich der Funktionsfähigkeit der Maschine bzw. Maschinenkomponente an; *F* gibt die zu erwartenden maschinenspezifischen Folgekosten bei Eintritt des Fehlers an; und *K* gibt die Möglichkeiten zur Korrektur des Fehlers, bevor dieser die Maschine schädigen kann, an (*K* betrifft somit die Möglichkeit der "rechtzeitigen" Korrektur des Fehlers).

Die Größe *S* ergibt sich aus der Auswirkung der Diagnose auf das übergeordnete System, Korrekturergebnissen_und erwarteten Restnutzungsdauern der Maschine aus vergleichbaren Fällen. Durch die Verwending der Größe *K* soll berücksichtigt werden, dass rechtzeitige Korrekturen zu einer geringeren Gefährdungsrate führen; so lassen sich z.B. bereits ausgeführte Inspektionen, wie Video-Endoskopie, nutzen, um Risiken und Schweregrade von Fehlern zu reduzieren.

Die Diagnoseprioritätszahl kann bei der Bewertung des Diagnoseschemas, des Diagnosesystems, des aktuellen Maschinenzustands, der notwendigen Instandhaltungsmaßnahmen und/oder des Ausfallrisikos der Maschine verwendet werden. Insbesondere kann die Diagnoseprioritätszahl bei der Auswahl des Diagnoseschemas und/oder des Diagnosesystems verwendet werden sowie bei der Entscheidung über Zeitpunkt und Art zu treffender Instandhaltungsmaßnahmen. Vorzugsweise wird die Diagnoseprioritätszahl in regelmäßigen zeitlichen Abständen aufgezeichnet und maschinenspezifisch abgelegt. Über die Größen *S* und *F* der Diagnoseprioritätszahl lassen sich Betriebs- und Serviceerfahrungen berücksichtigen. Über die Größe *K* kann die Diagnoseprioritätszahl gezielt in Instandhaltungsprozesse und Diagnoseprozesse eingebunden werden. Mittels der Diagnoseprioritätszahl lassen sich Diagnoseerfahrungen, Instandsetzungsmaßnahmen und alternative Erkennbarkeiten kontinuierlich abgleichen und z.B. monatlich maschinenspezifisch ablegen.

Im folgenden ist ein Beispiel für die Zuweisung von *S, F* und *K* angegeben.

Indexgröße *S* (Schwere der Auswirkung eines diagnostizierten Fehlers und erwartete Restnutzungsdauer): ergibt sich aus der Auswirkung der Diagnose auf das übergeordnete System, Korrekturergebnissen und erwarteten Restnutzungsdauern aus vergleichbaren Fällen. Dabei bedeuten:

| | |
|---|---|
| 9-10 | äußerst schwerwiegende Auswirkungen, nur einige Stunden Restnutzungsdauer |
| 8 | sehr ernste Auswirkungen, nur wenige Tage Restnutzungsdauer |
| 7 | ernst zu nehmende Auswirkungen, aber einige Woche betreibbar |
| 4 | noch ernste Auswirkungen, mehrere Monate nutzbar |
| 3 | leichte Auswirkungen, bis zu einem Jahr nutzbar |
| 1 | ohne Bedeutung |

Indexgröße *F* (wahrscheinliche Folgekosten bei Schadenseintritt): Tritt der Schaden auf bzw. liegen praktische Erfahrungen mit vergleichbaren Schäden vor, lassen sich maschinenspezifische Folgekosten quantifizieren. Dabei bedeuten:

| | |
|---|---|
| 10 | Anlagentotalschaden und existenzbedrohende Folgekosten |
| 8-9 | sehr hohe Folgekosten |
| 5-7 | hohe Folgekosten |
| 3-4 | mäßige Folgekosten |
| 1-2 | geringe Folgekosten |

Indexgröße *K* (Korrektur des diagnostizierten Fehlers): Rechtzeitige Korrekturen führen zu einer geringen Gefährdungsrate und senken die Diagnosezahl. Damit lassen sich auch ausgeführte Inspektionen wie Videoendoskopie nutzen, um Risiken zu reduzieren und Schweregrade zu reduzieren. Dabei bedeuten

| | |
|---|---|
| 9-10 | keine Chance zur Korrektur, oder Korrektur nicht ausgeführt |
| 7-8 | schlechte Korrekturmöglichkeiten |
| 5-6 | mäßige Korrekturmöglichkeiten |
| 4-5 | gute Korrekturvarianten |
| 2-3 | Korrekturen erledigt |
| 1 | Korrektur erledigt, Gefährdung beseitigt |

Der sich ergebende Wert der Diagnoseprioritätszahl kann beispielsweise folgendermaßen bewertet werden:
1 < DPZ < 100: akzeptables Restrisiko der Diagnose, keine zusätzliche Maßnahmen notwendig
100 < DPZ < 125: geringes Restrisiko, mindestens zusätzlicher Warnhinweis und Korrekturmaßnahme notwendig
125 < DPZ < 250: erhöhtes Restrisiko, mindestens zusätzliche Instandsetzungsmaßnahme erforderlich
250 < DPZ < 1000: inakzeptables Restrisiko, konstruktive Änderungsmaßnahme unbedingt erforderlich bzw. Ausfallgefahr

Ein praktisches Beispiel für das Aufstellen von Diagnoseprioritätszahlen für eine Windenergieanlage ist für die Komponenten Anstriebsstrang/Abtriebsstrang in Tabelle 2 gezeigt.

Ferner kann im Rahmen der Erfindung mit Risikoprioritätszahlen gearbeitet werden, die sich als Produkt dreier Indexgrößen *A_{R}, B_{R}* und *E_{R}* ergeben, wobei für jede Maschinenkomponente für mindestens einen vorbestimmten Fehler (typischerweise für mehrere verschiedene Fehler) jeweils eine Risikoprioritätszahl ermittelt wird. Dabei gibt *A_{R}* die erwartete Häufigkeit an, mit der der jeweilige Fehler im Betrieb der Maschine auftritt; *B_{R}* bezeichnet die erwartete Schwere der Auswirkung des Auftretens des Fehlers hinsichtlich der Funktionsfähigkeit der Maschine bzw. Maschinenkomponente, d.h. die Bedeutung bzw. das Schadensmaß des Fehlers; und *E_{R}* bezeichnet die Entdeckungswahrscheinlichkeit des Auftretens des Fehlers mittels des verwendeten Diagnoseschemas und Diagnosesystems, wobei hier auch eingeht, zu welchem Zeitpunkt bzw. in welchem Stadium der Fehler erkannt werden kann. Somit betrifft *A_{R}* das Auftreten bzw. die Wahrscheinlichkeit eines bestimmten Fehlers; *B_{R}* betrifft die Bedeutung bzw. das Schadensmaß des Fehlers und *E_{R}* betrifft die (rechtzeitige) Erkennbarkeit des Fehlers.

Auch hier wird typischerweise wie bei den anderen Prioritätszahlen im Rahmen der FMEA die jeweilige Größe *A_{R}, B_{R}* bzw. *E_{R}* auf der Basis der vorliegenden Informationen bezüglich der Maschine bzw. wo nötig auf der Basis von allgemeineren Erwägungen mit einer ganzen Zahl zwischen 1 und 10 bewertet, wofür nachfolgend ein Beispiel angegeben ist.

Indexgröße *A_{R}* (Auftreten/Wahrscheinlichkeit): Es wird bewertet, mit welcher Häufigkeit der Fehler in der Maschine auftreten kann und wie groß das Risiko ist, dass der Fehler in der bewerteten Maschine auftritt. Dabei bedeuten:

| | |
|---|---|
| 1 | sehr gut/sehr selten |
| 2-3 | tritt ganz selten auf |
| 4-6 | tritt selten auf |
| 7-8 | tritt häufig auf |
| 9-10 | kann sehr oft auftreten |

Indexgröße *B_{R}* (Bedeutung/Schadensmaß): Mit dieser Bewertung werden die Auswirkungen und die Folgen für das System dargestellt. Dabei bedeuten

| | |
|---|---|
| 1 | sehr kleiner Fehler/ kein Einfluss auf das System |
| 2-3 | kleiner Fehler /geringer Einfluss auf das System |
| 4-6 | mittelschwerer Fehler / mittlerer Einfluss auf das System |
| 7-8 | schwerer Fehler /großer Einfluss auf das System |
| 9-10 | sehr schwerer Fehler /sehr großen Einfluss auf das System |

Indexgröße *E_{R}* (Erkennbarkeit): Diese Bewertung bringt eine Aussage zur Erkennbarkeit des Fehlers und zu welchem Zeitpunkt der Fehler erkannt wird. Condition Monitoring Methoden erlauben es über die Erkennbarkeit, Risikoprioritätszahlen zu senken und miteinander zu vergleichen. Dabei bedeuten:

| | |
|---|---|
| 1 | sehr gut erkennbar |
| 2-3 | gut erkennbar |
| 4-6 | erkennbar |
| 7-8 | schlecht erkennbar |
| 9-10 | kaum erkennbar |

In der Regel gelten bei der FMEA Risikoprioritätszahlen größer als 125 als kritisch und erfordern besondere Maßnahmen. Beispielsweise kann durch ein verbessertes Diagnosesystem die Erkennbarkeit *E_{R}* gesteigert werden, um die Risikoprioritätszahl zu senken; bei einer Windenergieanlage kann beispielsweise zusätzlich zu den Schwingungssensoren ein Zähler für die Zahl der Partikel einer bestimmten Größenklasse im Schmiermittel vorgesehen werden, um die Erkennbarkeit von Fehlern am Triebstrang zu verbessern.

Die Risikoprioritätszahl kann bei der Bewertung des aktuellen Maschinenzustands, der notwendigen Instandhaltungsmaßnahmen, des Diagnoseschemas, des Diagnosesystems und/oder des Ausfallrisikos der Maschine bzw. der Maschinenkomponente verwendet werden. Ferner kann die Risikoprioritätszahl bei der Konzipierung von konstruktiven und/oder konfigurativen Verbesserungen der Maschine verwendet werden. Auch kann die Risikoprioritätszahl bei der Auswahl des Diagnosesystems bzw. des Diagnoseschemas verwendet werden. Ferner kann die Risikoprioritätszahl bei der Entscheidung über Zeitpunkt und Zeitpunkt und Art zu treffender Instandhaltungsmaßnahmen berücksichtigt werden.

Diagnoseverfahren können je nach Risikoprioritätszahl ausgewählt werden, wobei Parametrierungen sowohl im Band als auch im Warn- und Alarmwert definiert werden können. Insbesondere lassen sich auch Risikominderungen durch den Einsatz unterschiedlicher Diagnosesysteme (beispielsweise Hinzufügen eines Partikelzählers) quantitativ abschätzen.

Ein Beispiel für das Aufstellen von Risikoprioritätszahlen bei einer Windenergieanlage ist in Tabelle 3 für die Kompnente Abtriebsstrang gezeigt.

In dem Beispiel von Tabelle 3 sind jeweils drei verschiedene Werte für die Erkennbarkeit *E_{R}* angegeben, je nachdem welche Art von Diagnosesystem verwendet, nämlich (1) ohne Condition Monitoring System (CMS), (2) mit dem Standard-CMS und (3) mit Standard-CMS plus Partikelzähler, woraus sich jeweils drei unterschiedliche Werte für die Risikoprioritätszahl ergeben können. Auf diese Weise kann über die Auswirkung der Wahl des Diagnosystems (hier: Art des CMS) auf die Risikoprioritätszahl z.B. abgeschätzt werden, inwieweit höhere Investitionen für ein komplexeres Diagnosesystem zu einem verringerten Anlagenrisiko führen.

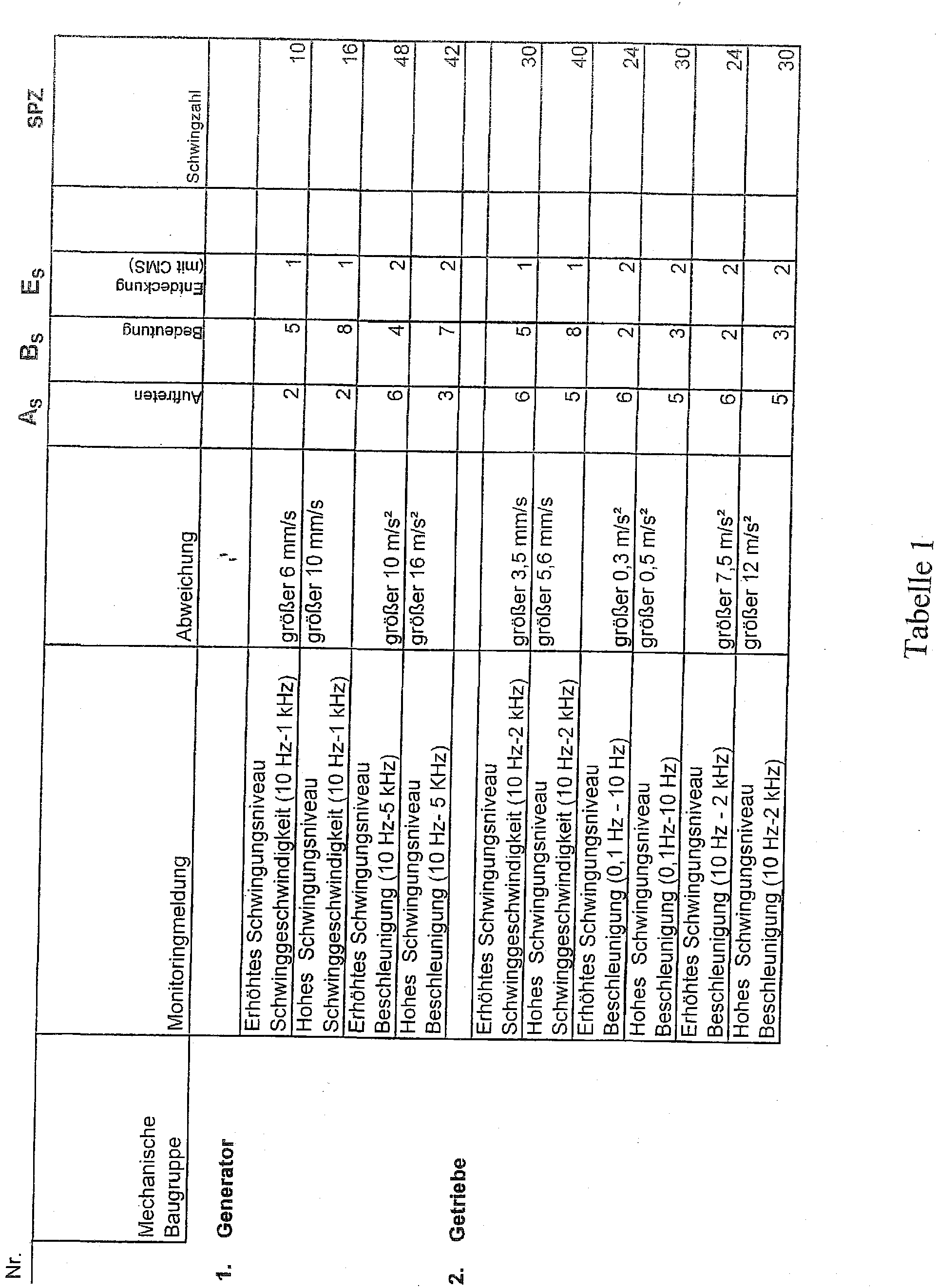

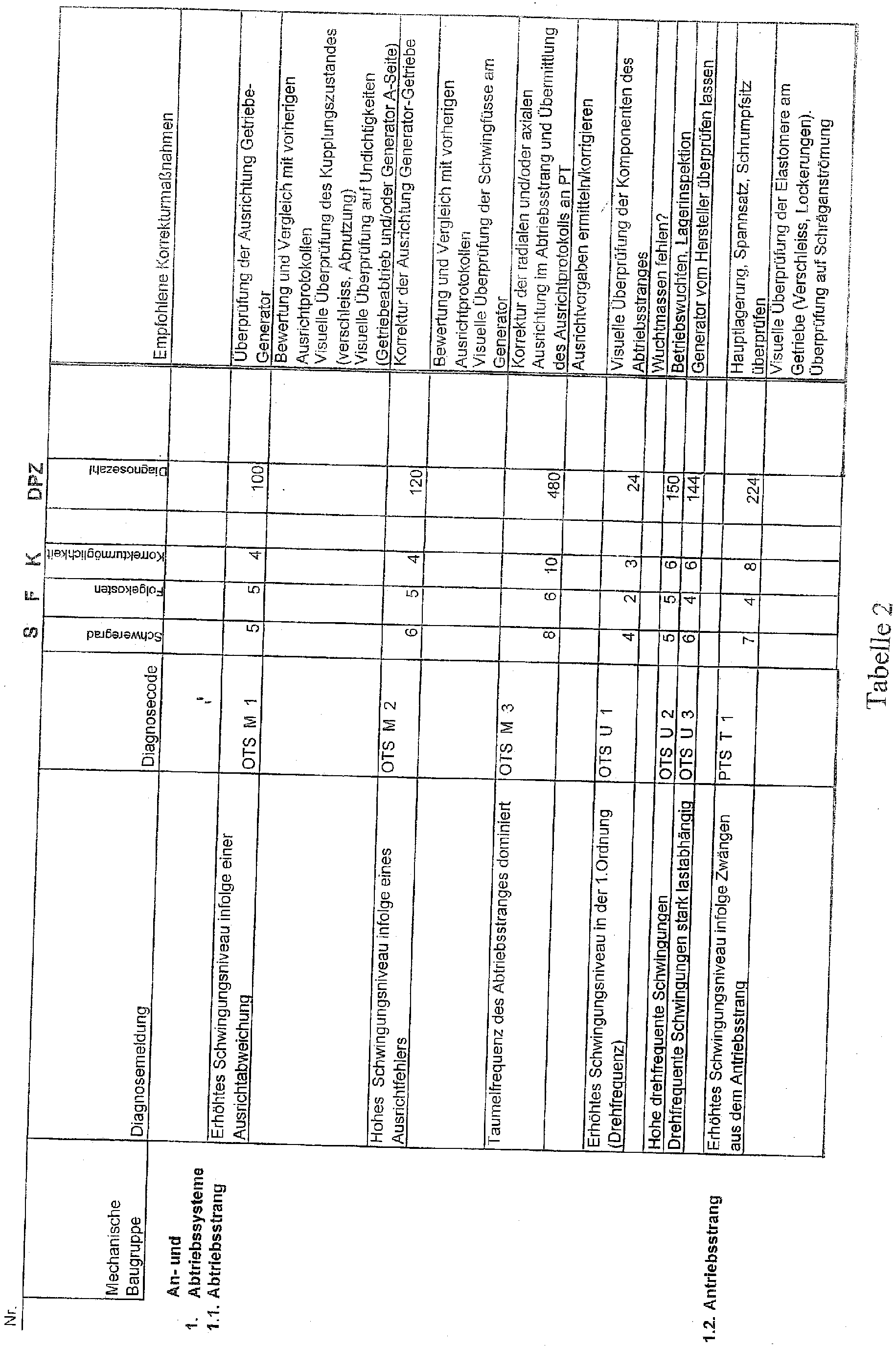

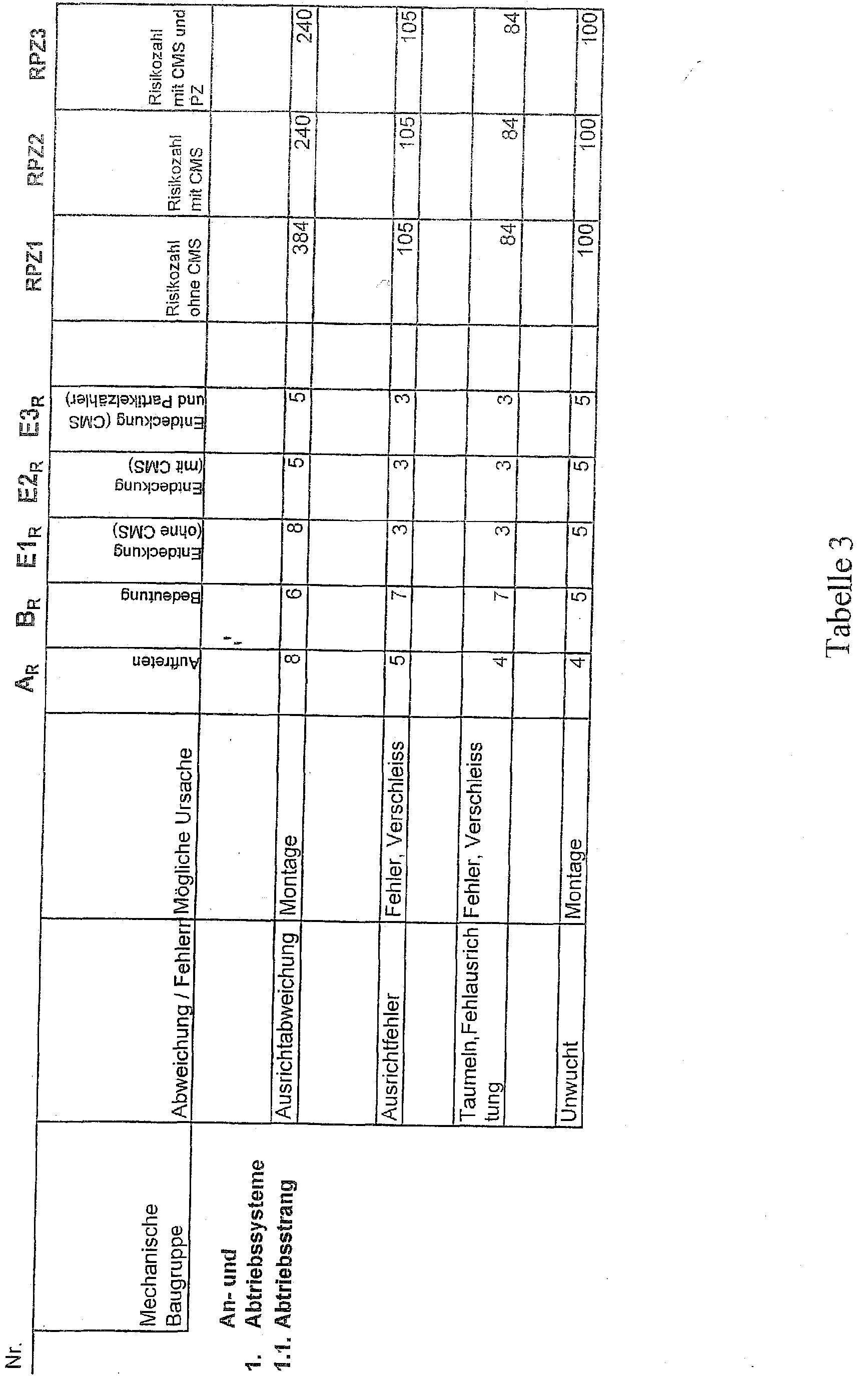

## Patentansprüche

1. Verfahren zum Überwachen einer Maschine, bei dem ein FMEA Verfahren verwendet und im Rahmen des FMEA-Verfahrens für mindestens eine Komponente der Maschine für mindestens einen vorbestimmten Grenzwert der Maschinenkomponente eine Prioritätszahl ermittelt wird, die sich aus dem Produkt der folgenden Indexgrößen ergibt: Schwere der Auswirkung der Überschreitung des Grenzwerts hinsichtlich der Funktionsfähigkeit der Maschine; und Entdeckungswahrscheinlichkeit der Überschreitung des Grenzwerts mittels eines vorgesehenen Schwingungserfassungssystems;
und wobei die Prioritätszahl bei der Bewertung des aktuellen Maschinenzustands, der notwendigen Instandhaltungsmaßnahmen, des Schwingungserfassungssystems und/oder des Ausfallrisikos der Maschine verwendet wird,
**dadurch gekennzeichnet, dass**
der Grenzwert ein Schwinggrenzwert ist und die Prioritätszahl eine Schwingprioritätszahl ist, wobei zum Produkt der Indexgrößen ferner die Häufigkeit, mit der der vorbestimmte Schwinggrenzwert überschritten wird, beiträgt; und dass
mindestens zwei Schwinggrenzwerte für je einen Frequenzbereich bei der Bildung der Indexgrößen verwendet werden.

2. Verfahren gemäß Anspruch 1, **dadurch gekennzeichnet, dass** die Maschine in mehrere Maschinenkomponenten unterteilt wird und für jede der Maschinenkomponenten mindestens eine Schwingprioritätszahl ermittelt wird.

3. Verfahren gemäß Anspruch 1 oder 2, **dadurch gekennzeichnet, dass** die bzw. jede Schwingprioritätszahl bei der Auswahl des Schwingungserfassungssystems herangezogen wird.

4. Verfahren gemäß einem der Ansprüche 1 bis 3, **dadurch gekennzeichnet, dass** die zeitliche Entwicklung der bzw. jeder Schwingprioritätszahl verfolgt und zwecks Überwachung der zeitlichen Veränderung des Maschinenzustands ausgewertet wird.

5. Verfahren gemäß Anspruch 4, **dadurch gekennzeichnet, dass** die zeitliche Entwicklung der bzw. jeder Schwingprioritätszahl bei der Entscheidung über Zeitpunkt und Art zu treffender Instandhaltungsmaßnahmen berücksichtigt wird.

6. Verfahren gemäß einem der vorhergehenden Ansprüche, **dadurch gekennzeichnet, dass** im Rahmen eines FMEA-Verfahrens für mindestens eine Komponente der Maschine für mindestens einen vorbestimmten Fehler eine Risikoprioritätszahl ermittelt wird, die sich aus dem Produkt der folgenden Indexgrößen ergibt: Häufigkeit, mit der der vorbestimmter Fehler im Betrieb der Maschine auftritt; Schwere der Auswirkung des Auftretens des Fehlers hinsichtlich der Funktionsfähigkeit der Maschine; und Entdeckungswahrscheinlichkeit des Auftretens des Fehlers mittels des verwendeten Diagnoseschemas und Diagnosesystems; und wobei die Risikoprioritätszahl bei der Bewertung des aktuellen Maschinenzustands, der notwendigen Instandhaltungsmaßnahmen, des Diagnoseschemas, des Diagnosesystems und/oder des Ausfallrisikos der Maschine verwendet wird.

7. Verfahren gemäß Anspruch 6, **dadurch gekennzeichnet, dass** die Maschine in mehrere Maschinenkomponenten unterteilt wird und für jede der Maschinenkomponenten mindestens eine Risikoprioritätszahl ermittelt wird.

8. Verfahren gemäß Anspruch 6 oder 7, **dadurch gekennzeichnet, dass** die bzw. jede Risikoprioritätszahl bei der Konzipierung von konstruktiven und/oder konfigurativen Verbesserungen an der Maschine verwendet wird.

9. Verfahren gemäß einem der Ansprüche 6 bis 8, **dadurch gekennzeichnet, dass** die bzw. jede Risikoprioritätszahl bei der Auswahl des Diagnosesystems und/oder des Diagnoseschemas herangezogen wird.

10. Verfahren gemäß einem der Ansprüche 6 bis 9, **dadurch gekennzeichnet, dass** die bzw. jede Risikoprioritätskennzahl bei der Entscheidung über Zeitpunkt und Art zu treffender Instandhaltungsmaßnahmen berücksichtigt wird.

11. Verfahren gemäß einem der Ansprüche 6 bis 10, **dadurch gekennzeichnet, dass** das Diagnosesystem Schwingungssensoren aufweist.

12. Verfahren gemäß einem der Ansprüche 6 bis 11, **dadurch gekennzeichnet, dass** das Diagnoseschema Schwinggrenzwerte aufweist.

13. Verfahren gemäß einem der vorhergehenden Ansprüche, **dadurch gekennzeichnet, dass** jede der Indexgrößen einen ganzzahligen Wert zwischen 1 und 10 einnehmen kann.

14. Verfahren gemäß einem der vorhergehenden Ansprüche, **dadurch gekennzeichnet, dass** es sich bei der Maschine um eine Windenergieanlage handelt.

15. Verfahren gemäß Anspruch 14, **dadurch gekennzeichnet, dass** es sich bei der Maschinenkomponente um den Triebstrang der Windenergieanlage handelt.

16. Vorrichtung zum Überwachen einer Maschine, mit einem Schwingungserfassungssystem zum Erfassen von Schwingungen mindestens einer Maschinenkomponente, und mit einer als Datenverarbeitungsanlage ausgebildeten Überwachungseinheit, die ausgebildet ist, um ein FMEA-Verfahren auszuführen und im Rahmen des FMEA-Verfahrens für die mindestens eine Maschinenkomponente für mindestens einen vorbestimmten Grenzwert der Maschinenkomponente eine Prioritätszahl zu ermitteln und auszugeben, die sich aus dem Produkt der folgenden Indexgrößen ergibt: Schwere der Auswirkung der Überschreitung des Grenzwerts hinsichtlich der Funktionsfähigkeit der Maschine; und Entdeckungswahrscheinlichkeit der Überschreitung des Grenzwerts mittels des vorgesehenen Schwingungserfassungssystems,
**dadurch gekennzeichnet, dass**
der Grenzwert ein Schwinggrenzwert ist und die Prioritätszahl eine Schwingprioritätszahl ist, wobei zum Produkt der Indexgrößen ferner die Häufigkeit, mit der der vorbestimmte Schwinggrenzwert überschritten wird, beiträgt; und dass
mindestens zwei Schwinggrenzwerte für je einen Frequenzbereich bei der Bildung der Indexgrößen verwendet werden.

17. Vorrichtung gemäß Anspruch 16, **dadurch gekennzeichnet, dass** ein Diagnosesystem mit Sensoren zum Erfassen von physikalischen Parametern der Maschine vorgesehen ist und die Überwachungseinheit ausgebildet ist, um im Rahmen eines FMEA-Verfahrens für mindestens eine Maschinenkomponente für mindestens einen vorbestimmten Fehler eine Risikoprioritätszahl zu ermitteln, die sich aus dem Produkt der folgenden Indexgrößen ergibt: Häufigkeit, mit der der vorbestimmter Fehler im Betrieb der Maschine auftritt; Schwere der Auswirkung des Auftretens des Fehlers hinsichtlich der Funktionsfähigkeit der Maschine; und Entdeckungswahrscheinlichkeit des Auftretens des Fehlers mittels des verwendeten Diagnoseschemas und Diagnosesystems.

## Claims

1. Method for monitoring a machine, in which an FMEA method is used and the FMEA method involves ascertaining for at least one component of the machine, for at least one predetermined limit value of the machine component, a priority index that is obtained from the product of the following index variables: seriousness of the effect of the limit value being exceeded in terms of the operability of the machine; and the likelihood of discovery of the exceeding of the limit value by means of a vibration detection system that is provided for;
and wherein the priority index is used for rating the present machine state, the necessary maintenance measures, the vibration detection system and/or the risk of failure of the machine,
**characterized in that**
the limit value is a vibration limit value and the priority index is a vibration priority index, wherein the product of the index variables is further contributed to by the frequency with which the predetermined vibration limit value is exceeded; and **in that**
at least two vibration limit values for one frequency range each are used for forming the index variables.

2. Method according to Claim 1, **characterized in that** the machine is divided into multiple machine components and at least one vibration priority index is ascertained for each of the machine components.

3. Method according to Claim 1 or 2, **characterized in that** the or each vibration priority index is used for selecting the vibration detection system.

4. Method according to one of Claims 1 to 3, **characterized in that** the trend in the or each vibration priority index over time is tracked and is evaluated for the purpose of monitoring the change in the machine state over time.

5. Method according to Claim 4, **characterized in that** the trend in the or each vibration priority index over time is taken into consideration for the decision about the time and nature of maintenance measures to be taken.

6. Method according to one of the preceding claims, **characterized in that** an FMEA method involves ascertaining for at least one component of the machine, for at least one predetermined error, a risk priority index that is obtained from the product of the following index variables: frequency with which the predetermined error occurs during operation of the machine; seriousness of the effect of the error occurring in terms of the operability of the machine; and likelihood of discovery of the occurrence of the error by means of the diagnosis scheme and diagnosis system used; and wherein the risk priority index is used for rating the present machine state, the necessary maintenance measures, the diagnosis scheme, the diagnosis system and/or the risk of failure of the machine.

7. Method according to Claim 6, **characterized in that** the machine is divided into multiple machine components and at least one risk priority index is ascertained for each of the machine components.

8. Method according to Claim 6 or 7, **characterized in that** the or each risk priority index is used for devising design and/or configuration improvements to the machine.

9. Method according to one of Claims 6 to 8, **characterized in that** the or each risk priority index is used for selecting the diagnosis system and/or the diagnosis scheme.

10. Method according to one of Claims 6 to 9, **characterized in that** the or each risk priority coefficient is taken into consideration for the decision about the time and nature of maintenance measures to be taken.

11. Method according to one of Claims 6 to 10, **characterized in that** the diagnosis system has vibration sensors.

12. Method according to one of Claims 6 to 11, **characterized in that** the diagnosis scheme has vibration limit values.

13. Method according to one of the preceding claims, **characterized in that** each of the index variables can assume an integer value between 1 and 10.

14. Method according to one of the preceding claims, **characterized in that** the machine is a wind energy installation.

15. Method according to Claim 14, **characterized in that** the machine component is the drive train of the wind energy installation.

16. Apparatus for monitoring a machine, having a vibration detection system for detecting vibrations of at least one machine component, and having a monitoring unit, in the form of a data processing installation, that is designed to carry out an FMEA method and, in the course of the FMEA method, to ascertain and output for the at least one machine component, for at least one predetermined limit value of the machine component, a priority index that is obtained from the product of the following index variables: seriousness of the effect of the limit value being exceeded in terms of the operability of the machine; and likelihood of discovery of the exceeding of the limit value by means of the vibration detection system that is provided for,
**characterized in that**
the limit value is a vibration limit value and the priority index is a vibration priority index, wherein the product of the index variables is further contributed to by the frequency with which the predetermined vibration limit value is exceeded; and **in that**
at least two vibration limit values for one frequency range each are used for forming the index variables.

17. Apparatus according to Claim 16, **characterized in that** a diagnosis system having sensors for capturing physical parameters of the machine is provided for and the monitoring unit is designed so as, in the course of an FMEA method, to ascertain for at least one machine component, for at least one predetermined error, a risk priority index that is obtained from the product of the following index variables: frequency with which the predetermined error occurs during operation of the machine; seriousness of the effect of the error occurring in terms of the operability of the machine; and likelihood of discovery of the occurrence of the error by means of the diagnosis scheme and diagnosis system used.

## Revendications

1. Procédé de surveillance d'une machine, avec lequel un procédé AMDE est utilisé et, dans le cadre du procédé AMDE, un coefficient de priorité est déterminé pour au moins un composant de la machine pour au moins une valeur limite prédéterminée du composant de machine, ledit coefficient de priorité résultant du produit des valeurs d'indice suivantes : gravité de l'effet du franchissement vers le haut de la valeur limite du point de vue de l'aptitude fonctionnelle de la machine ; et probabilité de découverte du franchissement vers le haut de la valeur limite au moyen d'un système de détection d'oscillations ;
et le coefficient de priorité étant utilisé lors de l'évaluation de l'état actuel de la machine, des mesures d'entretien nécessaires, du système de détection d'oscillations et/ou du risque de tomber en panne de la machine,
**caractérisé en ce que**
la valeur limite est une valeur limite d'oscillation et le coefficient de priorité est un coefficient de priorité d'oscillation, la fréquence à laquelle la valeur limite d'oscillation prédéterminée est franchie vers le haut contribuant en outre au produit des valeurs d'indice ; et **en ce que**
au moins deux valeurs limites d'oscillation sont utilisées respectivement pour chaque plage de fréquences lors de la formation des valeurs d'indice.

2. Procédé selon la revendication 1, **caractérisé en ce que** la machine est subdivisée en plusieurs composants de machine et au moins un coefficient de priorité d'oscillation est déterminé pour chacun des composants de machine.

3. Procédé selon la revendication 1 ou 2, **caractérisé en ce que** le ou chaque coefficient de priorité d'oscillation est utilisé lors de la sélection du système de détection d'oscillations.

4. Procédé selon l'une des revendications 1 à 3, **caractérisé en ce que** le développement dans le temps du ou de chaque coefficient de priorité d'oscillation est suivi et interprété en vue de surveiller la variation dans le temps de l'état de la machine.

5. Procédé selon la revendication 4, **caractérisé en ce que** le développement dans le temps du ou de chaque coefficient de priorité d'oscillation est pris en compte lors de la décision concernant le moment et la nature des mesures d'entretien à prendre.

6. Procédé selon l'une des revendications précédentes, **caractérisé en ce que** dans le cadre d'un procédé AMDE, un coefficient de priorité de risque est déterminé pour au moins un composant de la machine pour au moins un défaut prédéterminé, ledit coefficient de priorité de risque résultant du produit des valeurs d'indice suivantes : fréquence à laquelle le défaut prédéterminé survient en fonctionnement de la machine ; gravité de l'effet de la survenance du défaut du point de vue de l'aptitude fonctionnelle de la machine ; et probabilité de découverte de la survenance du défaut au moyen du schéma de diagnostic et du système de diagnostic employés ; et le coefficient de priorité de risque étant utilisé lors de l'évaluation de l'état actuel de la machine, des mesures d'entretien nécessaires, du schéma de diagnostic, du système de diagnostic et/ou du risque de tomber en panne de la machine.

7. Procédé selon la revendication 6, **caractérisé en ce que** la machine est subdivisée en plusieurs composants de machine et au moins un coefficient de priorité de risque est déterminé pour chacun des composants de machine.

8. Procédé selon la revendication 6 ou 7, **caractérisé en ce que** le ou chaque coefficient de priorité de risque est utilisé lors de la conception d'améliorations constructives et/ou configuratives sur la machine.

9. Procédé selon l'une des revendications 6 à 8, **caractérisé en ce que** le ou chaque coefficient de priorité de risque est utilisé lors de la sélection du schéma de diagnostic et/ou du système de diagnostic.

10. Procédé selon l'une des revendications 6 à 9, **caractérisé en ce que** le ou chaque coefficient de priorité de risque est pris en compte lors de la décision concernant le moment et la nature des mesures d'entretien à prendre.

11. Procédé selon l'une des revendications 6 à 10, **caractérisé en ce que** le système de diagnostic possède des capteurs d'oscillation.

12. Procédé selon l'une des revendications 6 à 11, **caractérisé en ce que** le schéma de diagnostic possède des valeurs limites d'oscillation.

13. Procédé selon l'une des revendications précédentes, **caractérisé en ce que** chacune des valeurs d'indice peut prendre une valeur entière entre 1 et 10.

14. Procédé selon l'une des revendications précédentes, **caractérisé en ce que** la machine est un aérogénérateur.

15. Procédé selon la revendication 14, **caractérisé en ce que** les composants de machine sont la chaîne motrice de l'aérogénérateur.

16. Dispositif de surveillance d'une machine, comprenant un système de détection d'oscillations destiné à détecter des oscillations d'au moins un composant de machine, et comprenant une unité de surveillance réalisée sous la forme d'un équipement de traitement de données, laquelle est configurée pour mettre en oeuvre un procédé AMDE et, dans le cadre du procédé AMDE, déterminer et délivrer un coefficient de priorité pour l'au moins un composant de machine pour au moins une valeur limite prédéterminée du composant de machine, ledit coefficient de priorité résultant du produit des valeurs d'indice suivantes : gravité de l'effet du franchissement vers le haut de la valeur limite du point de vue de l'aptitude fonctionnelle de la machine ; et probabilité de découverte du franchissement vers le haut de la valeur limite au moyen du système de détection d'oscillations présent ;
**caractérisé en ce que**
la valeur limite est une valeur limite d'oscillation et le coefficient de priorité est un coefficient de priorité d'oscillation, la fréquence à laquelle la valeur limite d'oscillation prédéterminée est franchie vers le haut contribuant en outre au produit des valeurs d'indice ; et **en ce que**
au moins deux valeurs limites d'oscillation sont utilisées pour chaque plage de fréquences lors de la formation des valeurs d'indice.

17. Dispositif selon la revendication 16, **caractérisé en ce qu'**un système de diagnostic comprenant des capteurs destinés à détecter des paramètres physiques de la machine est présent et l'unité de surveillance est conçue pour, dans le cadre d'un procédé AMDE, déterminer un coefficient de priorité de risque pour au moins un composant de machine pour au moins un défaut prédéterminé, ledit coefficient de priorité de risque résultant du produit des valeurs d'indice suivantes : fréquence à laquelle le défaut prédéterminé survient en fonctionnement de la machine ; gravité de l'effet de la survenance du défaut du point de vue de l'aptitude fonctionnelle de la machine ; et probabilité de découverte de la survenance du défaut au moyen du schéma de diagnostic et du système de diagnostic employés.
